# EUROPÄISCHE PATENTSCHRIFT

(11) **EP 2 807 369 B1**
(45) Veröffentlichungstag und Bekanntmachung des Hinweises auf die Patenterteilung: **29.11.2017**
(21) Anmeldenummer: 13702401.4
(22) Anmeldetag: 24.01.2013
(51) Int. Cl.: F03D 1/04, F03D 3/04

(54) **WINDKRAFTANLAGE MIT EINER VENTURI WIRKUNG**
WIND TURBINE WITH A VENTURI EFFECT
L'EOLIENNE A L'EFFET VENTURI

(30) Priorität: 25.01.2012 EP 12152458
(43) Veröffentlichungstag der Anmeldung: 03.12.2014
(73) Patentinhaber: Reitz, Georg, 27619 Schiffdorf (DE)
(72) Erfinder: Reitz, Georg, 27619 Schiffdorf (DE)
(74) Vertreter: Strobel, Wolfgang
(86) Internationale Anmeldenummer: PCT/EP2013/051323
(87) Internationale Veröffentlichungsnummer: WO 2013/110696

(56) Entgegenhaltungen:
- EP-A1- 1 916 415
- WO-A2-2009/129309
- FR-A1- 2 954 478
- US-A- 4 204 799
- US-A- 5 464 320
- US-A1- 2009 280 008
- US-A1- 2011 266 802

## Beschreibung

Die vorliegende Erfindung betrifft eine Windkraftanlage zur Erzeugung von Energie, insbesondere von elektrischer Energie, mittels bewegter Umgebungsluft.
Aus der EP 1 916 415 B1 ist eine Windkraftanlage zur Erzeugung von elektrischer Energie bekannt. Die Windkraftanlage dieses Standes der Technik weist einen Strömungskanal auf, durch den die Umgebungsluft durch Ausbildung eines Luftstroms geleitet wird, wobei mittels einer Luftbeschleunigungseinrichtung im Einlassabschnitt der Windkraftanlage die angesaugte Umgebungsluft beschleunigt wird und in einen sich anschließenden und verjüngenden Abschnitt strömt, in dem sie sich weiter beschleunigt. In einem nächsten Abschnitt wird durch die durchströmende Umgebungsluft ein Rotor in Drehung versetzt, wonach die strömende Luft in einen sich aufweitenden Abschnitt geführt wird, der einem Auslassabschnitt entspricht, wobei in einem anschließenden Abschnitt eine weitere Luftbeschleunigungseinrichtung vorgesehen ist, die die strömende Luft in die Umgebung nach außen zurückführt.
Die Energiegewinnung gemäß Windkraftanlage der EP 1 916 415 B1 basiert im Wesentlichen auf dem Prinzip der Luftabkühlung der einströmenden Umgebungsluft, die am Auslass eine deutlich geringere Temperatur als am Einlass aufweist. Basierend auf der Konstruktionsweise der Windkraftanlage gemäß EP 1 916 415 B1 hat der Erfinder weitere Überlegungen unternommen, den Wirkungsgrad dieser Anlage bzw. des dieser Anlage zugrundeliegenden Prinzips weiter zu verbessern, um einen höheren Wirkungsgrad der Windkraftanlage zu erreichen.

US 4 204 799 A offenbart eine Windkraftanlage nach dem Oberbegriff des Anspruchs 1. Der vorliegenden Erfindung liegt deshalb die Aufgabe zugrunde, ausgehend vom gattungsgemäßen Stand der Technik eine Windkraftanlage vorzuschlagen, die gegenüber diesem einen höheren Wirkungsgrad aufweist, d.h. noch mehr Energie aus bewegter Umgebungsluft zu gewinnen.
Diese Aufgabe wird durch die Merkmale des Anspruchs 1 gelöst.
Erfindungsgemäß weist die Windkraftanlage auf:
einen ersten Abschnitt (A) mit sich trichterförmig verjüngendem Querschnitt, in den eine erste Umgebungsluft eintritt und beschleunigt wird,
einen zweiten Abschnitt (B) von im Wesentlichen konstanten Querschnitt, in dem sich ein Rotor befindet, der durch die durchströmende Umgebungsluft in Drehung versetzbar ist, wobei der zweite Abschnitt (B) eine rohrförmige Fortsetzung aufweist,
einen dritten Abschnitt (C), durch den sich die rohrförmige Fortsetzung des zweiten Abschnitts (B) erstreckt und der einen rohrförmigen sich verjüngenden Einlasstrichter aufweist, der die rohrförmige Fortsetzung umgibt und zum Eintritt einer zweiten Umgebungsluft in den Strömungskanal dient,
einen vierten Abschnitt (D), in dem die rohrförmige Fortsetzung des zweiten Abschnitts (B) endet und der eine Ebene des geringsten Querschnitts (0-Ebene) des Strömungskanals gebildet aus erster und zweiter Umgebungsluft aufweist,
einen fünften sich aufweitenden Abschnitt (E), und
einen sich an den fünften Abschnitt (E) anschließenden sechsten Abschnitt (F), in dem zumindest eine Luftbeschleunigungseinrichtung angeordnet ist.

Es hat sich überraschenderweise gezeigt, dass durch das Einströmen einer zweiten Umgebungsluft und ohne Beeinflussung der einströmenden ersten und zweiten Umgebungsluft im Einlassbereich, beispielsweise durch eine Luftbeschleunigungseinrichtung, der Wirkungsgrad positiv beeinflusst wird und die Windkraftanlage in der Lage ist, deutlich mehr Energie zur Verfügung zu stellen.

Die zumindest eine Luftbeschleunigungseinrichtung befindet sich im Auslassabschnitte, so dass negative Einflüsse auf die strömende Umgebungsluft, wie beispielsweise durch sich drehende Ventilatoren als Luftbeschleunigungseinrichtungen vermieden werden können.

Vorteilhafterweise ist die Windkraftanlage modulartig zumindest mit dem ersten bis sechsten Abschnitt aufgebaut, wobei jeder Abschnitt auf einfache Weise mit seinem/n benachbarten Abschnitt/en auf einfache Weise verbindbar ist. Dies bringt große Vorteile bei der Herstellung, dem Transport, der Montage sowie der Wartung und Instandhaltung mit sich. Die einzelnen Module können separat hergestellt und transportiert werden, sie sind schnell montierbar und die einzelnen Module können bei Bedarf leicht ausgetauscht werden.

Zur Unterstützung dieser Vorteile ist jeder Abschnitt auf einer Unterkonstruktion aufgenommen, die ihrerseits verfahrbar ist, wodurch die leichte Handhabung der Module weiter erhöht wird.

Die Verfahrbarkeit kann beispielsweise durch an der Unterkonstruktion angebrachten Stützrädern oder Stützrollen erzielt werden, wobei beispielsweise die Stützräder frei beweglich sind oder auch auf Schienen laufen können.

In einer bevorzugten Ausführungsform ist der Rotor Teil einer Turbine, die zu seiner Lagerung einen Stator aufweist, der ebenfalls im Strömungskanal angeordnet ist. Der Stator lagert dabei die drehbare Welle des Rotors und weist vorteilhafterweise Luftleitelemente auf, die die einströmende erste Umgebungsluft auf die Rotorblätter unter einem bevorzugten Einfallswinkel ausrichten.

Zur Erzeugung elektrischer Energie mittels eines Generators ist der Rotor mit einem Zahnrand verbunden, das mit einem Zahnrad kämmt, durch das ein Generator antreibbar ist. Die Auslegung kann somit auf einfache Weise durch die Auswahl einer geeigneten Zahnradpaarung erfolgen.

Alternativ kann der Rotor mit einem Riemen- oder Kettenantrieb verbunden sein, der mit einem Antriebsrad eines Generators verbunden ist.

Die erfindungsgemäße Windkraftanlage kann jedoch nicht nur zur Erzeugung von elektrischer Energie, sondern auch als Arbeitsmaschine dienen, die in der Lage ist ein entsprechendes Drehmoment bzw. eine entsprechende Drehzahl zu liefern, was für den Antrieb weiterer Arbeitsmaschinen oder Arbeitseinrichtungen zur Verfügung steht. Als einige nicht abschließende Beispiele werden hier genannt: Schredder, Pressen, Pumpen.

Vorteilhafterweise konnte festgestellt werden, dass der Abstand der Auslassöffnung der rohrförmigen Fortsetzung des zweiten Abschnitts von der Ebene des geringsten Querschnitts, hier 0-Ebene genannt, des vierten Abschnitts vom Innendurchmesser der rohrförmigen Fortsetzung des zweiten Abschnitts abhängt. Aufgrund der modulartigen Aufbauweise der einzelnen Abschnitte ist es somit möglich, durch einfache Verfahrbarkeit beispielsweise des ersten und zweiten Abschnitts bezüglich der dritten bis sechsten Abschnitte die optimale Lage der rohrförmigen Fortsetzung empirisch zu ermitteln.

In einer alternativen Ausführungsform kann der Rotor auch außerhalb des Strömungskanals gelagert sein, wodurch der Strömungskanal von die Luftströmung behindernden Einrichtungen weiter befreit ist.

In einer bevorzugten Ausführungsform ist die zumindest eine Luftbeschleunigungseinrichtung als Ventilator ausgebildet. Bevorzugt weist der Ventilator ein Laufrad auf, das mittels eines Motors in Drehung versetzbar ist.

Herkömmliche Bauweisen von Ventilatoren haben einen Motor mit einer Antriebswelle, auf der sich das Laufrad oder die Ventilatorflügel befinden. Alternativ und bevorzugt ist der Motor des Ventilators außerhalb des Strömungskanals angeordnet. Dies führt zu folgenden Vorteilen:

Erstens kann der Durchmesser des Ventilators deutlich kleiner werden. Dadurch verkürzt sich die Gesamtlänge der Anlage wesentlich, wobei auch weniger Reibungsverluste auftreten.

Der außenstehende Motor treibt durch geeignete technische Maßnahmen, wie beispielsweise Zahnriemen den Ventilator an. Somit kann zweitens vermieden werden, dass die durch den Motor erzeugte Wärme an den Luftstrom im Auslassabschnitt übertragen wird, wobei der Wärmeanstieg des Luftstroms sich negativ auf den Wirkungsgrad der Anlage auswirkt.

Gemäß bevorzugter Ausführungsform der erfindungsgemäßen Windanlage ist ein siebter Abschnitt in Form eines sich aufweitenden Auslassrohres bzw. Auslasstrichters vorgesehen, der sich an den sechsten Abschnitt anschließt. Durch geeignete Ausgestaltung der Rotorschaufeln des Ventilators kann die Luft bereits hier so gerichtet werden, dass die Strömungsrichtung im Wesentlichen den Neigungswinkeln des sich aufweitenden Auslassrohres entspricht. Dadurch wird der Wirkungsgrad der Anlage weiter erhöht.

In einer ersten, in den Figuren weiter unten detailliert beschriebenen Ausführungsform, weist die erfindungsgemäße Windkraftanlage eine im Wesentlichen horizontale Erstreckung auf. Alternativ kann sie jedoch auch in im Wesentlichen vertikaler Richtung angeordnet sein, wobei bevorzugt sich der Einlass oben und der Auslass unten befinden. Da kühle Luft schwerer ist als warme Luft, wirkt sich die nach unten geführte kühlere Luft gegenüber der Umgebungsluft als positiv für den Wirkungsgrad der Windkraftanlage aus.

Wie bereits oben erwähnt, wirkt sich eine Störung des durchströmenden Luftstroms negativ auf den Wirkungsgrad der Windkraftanlage aus. Aus diesem Grund ist vorteilhaft, dass die mit dem Rotor verbundene Antriebseinrichtung eingehaust ist, wobei die Einhausung strömungstechnisch optimiert sein kann (Tropfenform, etc.).

Zur Erhöhung der Energieausbeute bzw. des Wirkungsgrads der Windkraftanlage wird der Strömungskanal, der von einer rohrförmigen Hülle umgeben ist, dahingehend optimiert, dass die Hülle mit einer geeigneten reibungsarmen Innenbeschichtung versehen ist, was den Reibwiderstand gegenüber der strömenden Umgebungsluft reduziert.

Weiterhin ist vorteilhaft, dass die rohrförmige Fortsetzung von im Wesentlichen konstantem Querschnitt ist oder sich in Strömungsrichtung leicht aufweitet (Diffusor).

Weitere Einzelheiten, Merkmale und Vorteile der vorliegenden Erfindung ergeben sich aus der nachfolgenden Beschreibung unter Bezugnahme auf die beigefügten Zeichnungen. Darin zeigt:
- Fig. 1: eine schematische Seitenansicht der erfindungsgemäßen Windkraftanlage unterteilt in einzelne Abschnitte;
- Fig. 2: eine Schnittansicht durch die Windkraftanlage von Fig. 1;
- Fig. 3: eine vergrößerte Schnittansicht des Einlassabschnitts bis zur 0-Ebene;
- Fig. 4: eine Schnittansicht in vergrößertem Maßstab des Auslassabschnitts beginnend bei der 0-Ebene; und
- Fig. 5: eine Seitenansicht einer alternativen Ausführungsform des Auslassabschnitts gemäß Fig. 4.

In den beigefügten Zeichnungen sind gleiche Teile bzw. Elemente mit den gleichen Bezugsziffern versehen.

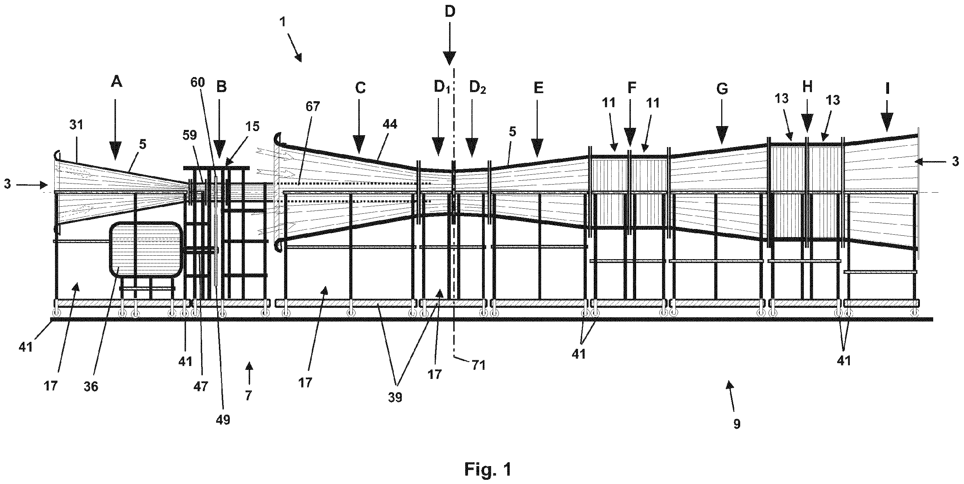

Fig. 1 zeigt in schematischer Seitenansicht eine erste bevorzugte Ausführungsform der erfindungsgemäßen Windkraftanlage 1. Die Windkraftanlage 1 ist modulartig aufgebaut und weist einen ersten Abschnitt A, einen zweiten Abschnitt B, einen dritten Abschnitt C, einen vierten Abschnitt D, einen fünften Abschnitt E, einen sechsten Abschnitt F, einen siebten Abschnitt G, einen achten Abschnitt H und einen neunten Abschnitt I auf. Wie aus Fig. 1 ersichtlich, ist der vierte Abschnitt D im Wesentlichen symmetrisch aufgebaut und weist eine Grenzebene, hier genannt 0-Ebene 71 auf, die die Grenzfläche zwischen Einlass bzw. Einlassabschnitt und Auslass bzw. Auslassabschnitt der erfindungsgemäßen Windkraftanlage 1 bildet. Der Abschnitt D ist deshalb in die Abschnitte D₁ und D₂ unterteilt. Insgesamt umfasst der Einlass bzw. Einlassabschnitt der erfindungsgemäßen Windkraftanlage 1 somit die Abschnitte A, B, C und D₁ und der Auslass umfasst somit die Abschnitte D₂, E, F, G, H und I.

Die Windkraftanlage 1 weist einen Strömungskanal 3 auf, der sich vom ersten Abschnitt A bis zum letzten Abschnitt I erstreckt. Er wird umgeben von einer rohrförmigen äußeren Hülle 5, die beispielsweise aus einem Metallblech gebildet sein kann. Der Strömungskanal weist einen im Wesentlichen kreisförmigen Querschnitt auf.

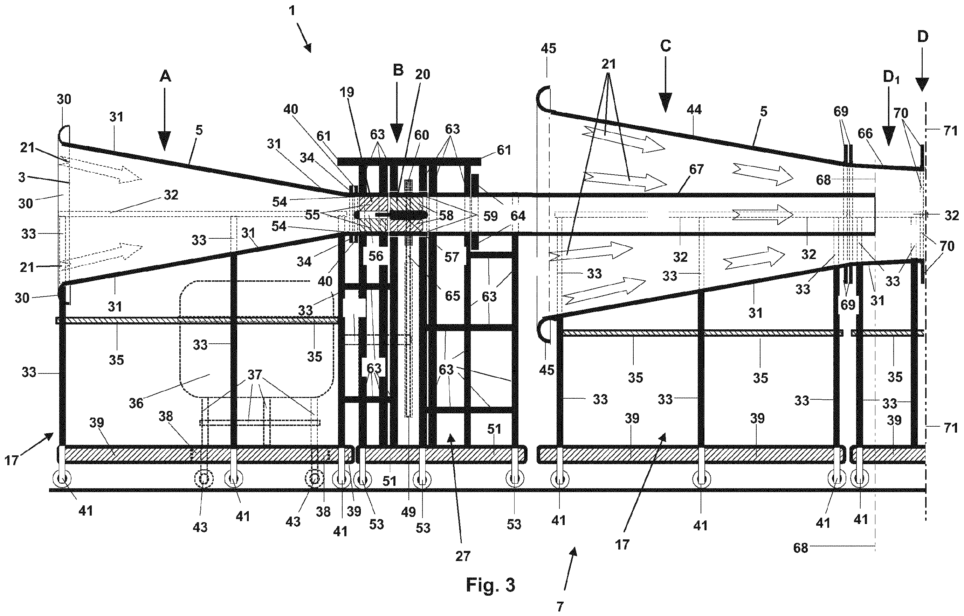

Im ersten Abschnitt A weist der Strömungskanal 3 einen Einlasstrichter 31 auf, der sich kontinuierlich verjüngt. In diesen Einlasstrichter 31 tritt eine erste Umgebungsluft ein. Im zweiten Abschnitt B weist der Strömungskanal eine im Wesentlichen konstante Querschnittsfläche auf mit einem Turbinenrohr 54, 59 und einer rohrförmigen Fortsetzung 67, wie dies weiter unten unter Bezugnahme auf Fig. 3 näher erläutert werden wird.

Die Windkraftanlage 1 weist einen dritten Abschnitt C auf, der einen weiteren Einlasstrichter 44 aufweist, der sich zunehmend verjüngt und in den eine zweite Umgebungsluft eintritt. Diese strömt auch entlang der Außenseite der rohrförmigen Fortsetzung 67.

Im vierten Abschnitt D befindet sich in dessen Mitte die Grenzfläche, bezeichnet als 0-Ebene 71 mit dem geringsten Querschnitt des kombinierten Strömungskanals aus erster Umgebungsluft und zweiter Umgebungsluft. Die 0-Ebene 71 bildet die Grenzfläche zwischen Einlassabschnitt 7 und Auslassabschnitt 9. Beide Abschnitte werden näher unter Bezugnahme auf die Figuren 3 bis 5 beschrieben.

Im fünften Abschnitt E weitet sich der Strömungskanal 3 wieder auf, woran sich im anschließenden sechsten Abschnitt F zwei Luftbeschleunigungseinrichtungen anschließen. Der sechste Abschnitt F weist im Wesentlichen konstanten Querschnitt auf.

In einem siebten Abschnitt G weitet sich der Strömungskanal 3 weiter auf und schließen sich in einem achten Abschnitt H zwei weitere Luftbeschleunigungseinrichtungen 13 an. Der achte Abschnitt H weist einen im Wesentlichen konstanten Querschnitt auf. Die Windkraftanlage 1 endet schließlich mit einem neunten Abschnitt I, in dem sich der Strömungskanal weiter aufweitet.

Aus Platzgründen ist neben dem ersten Abschnitt A ein Generator 36 angeordnet, der eine Antriebswelle 47 aufweist, auf der ein Antriebsrad 49 aufgesetzt ist, das mit einem Antriebsrad 60 einer Turbine 15 in Verbindung steht.

Wie aus Fig. 1 weiterhin ersichtlich, und wie weiter unten noch weiter erläutert wird, ist jeder Abschnitt A bis I auf einer entsprechenden Tragekonstruktion 17 gelagert, die ihrerseits auf je einer Unterkonstruktion 39 für jeden Abschnitt A bis I gelagert ist. Die Unterkonstruktion 39 weist ihrerseits Stützräder 41 auf, so dass die modulartigen Abschnitte A bis I jeweils einzeln bewegbar sind.

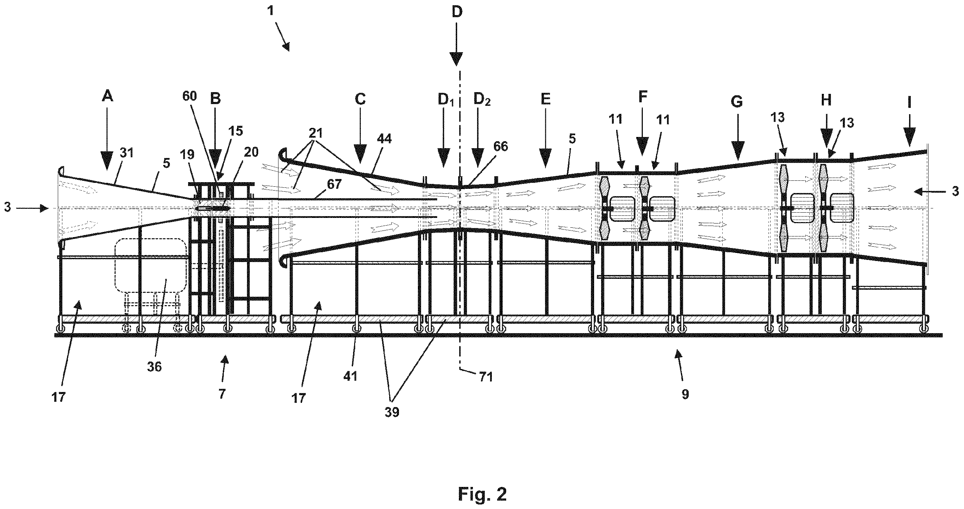

In Fig. 2 ist die erfindungsgemäße Windkraftanlage 1 von Fig. 1 schematisch im Schnitt dargestellt. Insbesondere und wie weiter unten unter Bezugnahme auf die Figuren 3 bis 5 näher erläutert wird, sind in dieser Schnittdarstellung Stator 19 und Rotor 20 der Turbine 15 dargestellt. Weiterhin sind durch Pfeile 21 die strömende zweite Umgebungsluft dargestellt. Im Auslassabschnitt 9 sieht man deutlicher die Luftbeschleunigungseinrichtungen 11 und 13, die in Form von Ventilatoren ausgebildet sind.

Es wird nunmehr Bezug genommen auf Fig. 3, in der in vergrößertem Maßstab der Einlassabschnitt 7 in Schnittansicht gemäß Fig. 2 dargestellt ist. Der Einlasstrichter 31, der im ersten Abschnitt A den Strömungskanal 3 umschließt und zur Aufnahme von erster Umgebungsluft gemäß Pfeil 21 dient, weist in seinem vorderen Ende eine abgerundete Einströmeinrichtung 30 auf. Der Einlasstrichter 31 wird gehalten von einer Tragkonstruktion 17, die im Beispielsfalle wie folgt aufgebaut ist.

Die Tragkonstruktion 17 umfasst vertikale Stützträger oder -streben 33 und horizontale Stütz- oder Verstärkungsstreben 32 und 35, die miteinander verbunden sind. Die horizontalen Stützstreben 32, 35 erstrecken sich sowohl parallel als auch quer zur Achse des Strömungskanals3. Auf bzw. in dieser rahmenartigen Tragkonstruktion 17 ruht der Einlasstrichter 31. Die Tragkonstruktion 17 ruht auf einer Unterkonstruktion 39, die in Form einer ebenen Platte ausgebildet ist. Damit der erste Abschnitt A bewegbar bzw. verfahrbar ist, sind an der Unterkonstruktion 39 Stützrollen 41 angebracht, die den gesamten ersten Abschnitt A abstützen und fahrbar machen.

An seinem der Einströmeinrichtung 30 entgegengesetzten Ende des Einlasstrichters 31 ist ein Flanschring 34 angebracht, der zur Verbindung mit einem Flanschring 40 dient, der an dem Turbinenrohr 54 angebracht ist. Durch lösbare Verbindungen, beispielsweise Bolzen-Mutter können die beiden Flanschringe 34 und 40 lösbar miteinander verbunden werden, wodurch ein kontinuierlicher Strömungskanals 3 gebildet wird.

Aufgrund der Schnittdarstellung von Fig. 3 sind hinter der Schnittebene dargestellte Elemente gestrichelt gezeichnet.

Der zweite Abschnitt B beherbergt die Energieerzeugungs- bzw. Umwandlungsvorrichtung in Form der Turbine 15. Die Turbine 15 weist einen Rotor 20 mit einer Rotorwelle 57 und Rotorflügelblättern 58 auf. Zur Lagerung der Rotorwelle ist ein Stator 19 vorgesehen, mit einer Nabe 56, die zur Aufnahme der Rotorwelle 57 dient. Der Stator weist Flügelblätter 55 auf, die die Aufgabe haben, die anströmende Umgebungsluft derart abzulenken, dass sie unter einem gewünschten Winkel auf die Flügelblätter 58 des Rotors 20 trifft. Der Stator 19 wird von dem Turbinenrohr 54 und der Rotor 20 wird von dem Turbinenrohr 59 umgeben.

Der zweite Abschnitt B weist eine Tragkonstruktion 27 auf, die eine Mehrzahl von vertikalen und horizontalen Stützen bzw. Streben 63 aufweist, die eine rahmenartige Stützstruktur bilden, die sich auf einer Unterkonstruktion 51 in Form eines plattenförmigen Elements abstützt. Das plattenförmige Element 51 ruht seinerseits auf Stützrädern 53, wodurch der zweite Abschnitt B ebenfalls verfahrbar ist.

Die Streben 63 werden abgedeckt von einer Abdeckkonstruktion 61, die zur Aufnahme von Kräften dient.

Weil der Generator 36 sich hinter dem Strömungskanal 3 befindet, ist er nur gestrichelt dargestellt. Der Generator 36 ruht auf einer Tragkonstruktion 37 mit vertikalen und horizontalen Streben. Die Tragkonstruktion 37 ruht auf einer Unterkonstruktion 38, die ähnlich wie die Unterkonstruktion 39 oder 51 plattenförmig ausgebildet ist. Um den Generator verfahrbar zu gestalten, ruht die Unterkonstruktion 38 wiederum auf Stützrollen 43.

An das Turbinenrohr 59 schließt sich eine rohrförmige Fortsetzung 67, d.h. ein Abstromrohr der Turbine 15 an. Im dargestellten Beispielsfall weist die Fortsetzung 67 den gleichen Durchmesser wie das Turbinenrohr 54, 59 auf. Ein Ringflansch 64 ist vorgesehen, der zum Verbinden beispielsweise mit der zugehörigen Tragstrukturstrebe 63 dient.

In einer alternativen Ausführungsform kann zwischen Turbinenrohr 59 und rohrförmiger Fortsetzung 67 ein Diffusor in Form einer Rohraufweitung zwischengesetzt sein, so dass der Querschnitt des Turbinenrohrs 54, 59 kleiner ist als der Querschnitt der rohrförmigen Fortsetzung 67 (nicht dargestellt).

Der Rotor 20 weist einen ihn außen umgebenden Umfassungskranz 60 auf, der über einen entsprechenden Zahnradriemen 65 einen Antrieb auf das Antriebsrad 49 des Generators 36 übertragen kann, das auf der Generatorwelle 47 gelagert ist.

Die rohrförmige Fortsetzung 67 erstreckt sich durch den gesamten dritten Abschnitt C der erfindungsgemäßen Windkraftanlage 1 bis hinein in den ersten Teilabschnitt D₁ des vierten Abschnitts D. Der dritte Abschnitt C weist einen Einlasstrichter 44 auf, mit einer Einströmeinrichtung 45 für die zweite Umgebungsluft gemäß den Pfeilen 21.

Wie aus Fig. 3 ersichtlich, umströmt die zweite Umgebungsluft die rohrförmige Fortsetzung 67 bis zum Ende der Fortsetzung 67 in einer Ebene 68, deren Beabstandung von der 0-Ebene 71 abhängig ist vom Innendurchmesser der rohrförmigen Fortsetzung 67. Durch die Verfahrbarkeit des ersten Abschnitts A zusammen mit dem zweiten Abschnitt B bezüglich des dritten und jeden weiteren Abschnitts C bis I kann die optimale Einstellung der Ebene 68, d.h. der optimale Abstand der Auslassöffnung der rohrförmigen Fortsetzung 67 von der 0-Ebene 71 empirisch ermittelt und eingestellt werden.

Der Einlasstrichter 44 des dritten Abschnitts C ruht ähnlich wie der Einlasstrichter 31 des ersten Abschnitts A auf einer vergleichbaren rahmenartigen Tragstruktur 17 mit vertikalen Stützen 33 und horizontalen Verstärkungsstreben 32 und 35, wobei diese Tragstruktur 17 ihrerseits auf der plattenförmigen Unterkonstruktion 39 ruht. Diese plattenförmige Unterkonstruktion 39 ruht wiederum auf Stützrädern 41, die ihre Verfahrbarkeit gewährleisten.

Zur Verbindung mit dem vierten Abschnitt D weist diese an der Einlassseite und der Einlasstrichter 44 an seiner Auslassseite jeweils einen Ringflansch 69 auf, die auf einfache Weise und lösbar miteinander verbunden werden können.

Der vierte Abschnitt D weist in seinem Teilabschnitt D₁ eine rohrförmige Umhüllung 66 in Form eines weiteren Einlasstrichters auf, der sich bis zur 0-Ebene 71 erstreckt. An der 0-Ebene 71 des Einlasses 7 befindet sich an der rohrförmigen Umhüllung 66 ein weiterer und letzter Ringflansch 70, der zusammenwirkt mit einem Ringflansch 72 eines rohrförmigen Auslasstrichters 73 des Strömungskanals 3. Auch die beiden Hälften D₁ und D₂ des vierten Abschnitts D weisen Tragstrukturen 33, 32 und 35, abgestützt auf Unterkonstruktionen 39, die ihrerseits auf Stützrädern 41 ruhen, auf.

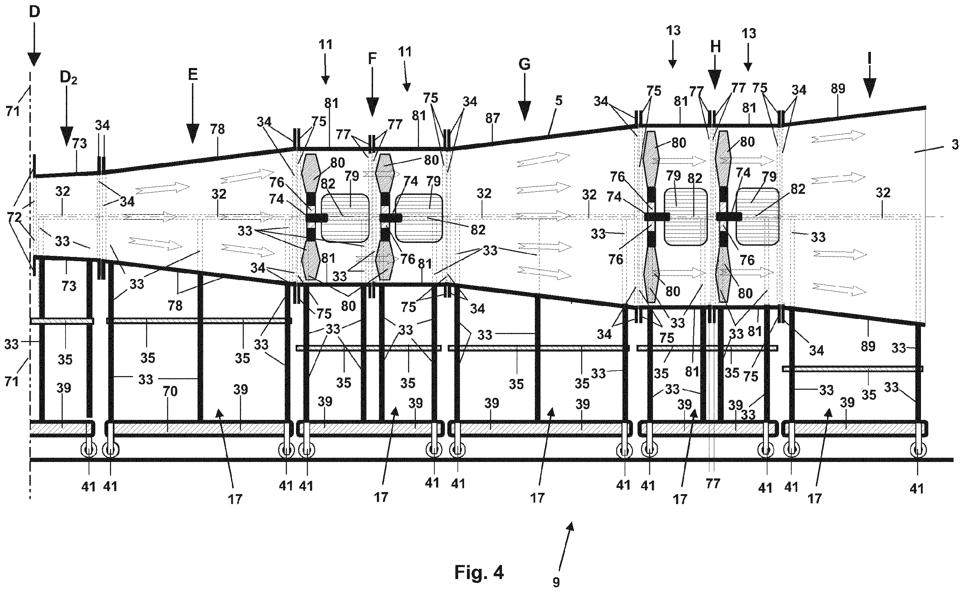

Wie aus Fig. 4 ersichtlich, schließt sich an den vierten Abschnitt D über eine weitere Ringflanschverbindung 34 ein weiterer Auslasstrichter 78 an, der wie im Beispielsfall dargestellt, einen unterschiedlichen Aufweitungswinkel gegenüber dem Aufweitungswinkel des Auslasstrichters 73 aufweist.

Der Auslass bzw. Auslassabschnitt 9, detaillierter dargestellt in Fig. 4, weist miteinander verbundene Abschnitte, nämlich den Halbabschnitt D₂ des vierten Abschnitts D, den fünften Abschnitt E, den sechsten Abschnitt F, den siebten Abschnitt G, den achten Abschnitt H und den neunten Abschnitt I auf. Wie aus Fig. 4 ersichtlich, sind wieder vergleichbare Tragkonstruktionen 17 mit Stützen und Streben 32, 33 und 35 zum Lagern des Strömungskanals 3 vorgesehen, wobei wiederum zur Verfahrbarkeit der einzelnen Abschnitte Stützrollen 41 an Unterkonstruktionen 39 vorhanden sind, die die Tragstrukturen 17 stützen.

Ringflansche 34, 75, 77 sind vorgesehen, die sowohl ein Verbinden der einzelnen Abschnitte miteinander als auch ein Lösen zu Wartungsarbeiten, etc. auf einfache Weise ermöglichen. Der fünfte Abschnitt G mit seinem Auslasstrichter 78 weitet sich auf zum 6. Abschnitt F, in dem zwei über die Flansche 77 entkoppelbare Ventilatoren 11 angeordnet sind. Die Ventilatoren weisen Laufräder bzw. Flügelblätter 80 auf, die auf Motorwellen 74 drehbar gelagert sind und von Motoren 79 angetrieben werden. Die Laufräder 80 sind montiert auf Antriebsrädern 76.

Eine Umhüllung bzw. ein Rohr 81 umgibt den Strömungskanal 3 im sechsten Abschnitt F und im achten Abschnitt H. In diesem achten Abschnitt H sind wiederum zwei Ventilatoren 13 angeordnet, die denselben Aufbau haben wie die Ventilatoren 11, nur etwas größer sind. Mit Bezugsziffer 82 ist eine Verstärkungsstruktur der Ventilatorenumhüllung 81 bezeichnet.

Zwischen dem sechsten Abschnitt F und dem achten Abschnitt H erstreckt sich ein siebter Abschnitt G, der in Form eines sich aufweitenden Trichters 87 ausgebildet ist. An den achten Abschnitt H mit den beiden Ventilatoren 13 schließt sich ein weiterer, neunter Abschnitt I mit einem sich aufweitenden Auslasstrichter 89.

Die Fig. 4 zeigt eine erste Ausführungsform des Auslassabschnitts 9 der vorliegenden Erfindung. Grundsätzlich kann die Windkraftanlage 1 auch nur einen der beiden Ventilatoren 11 aufweisen, und sind die Abschnitte G bis H optional. Je mehr Energie geliefert werden soll, desto mehr und/oder größere Ventilatoren werden benötigt.

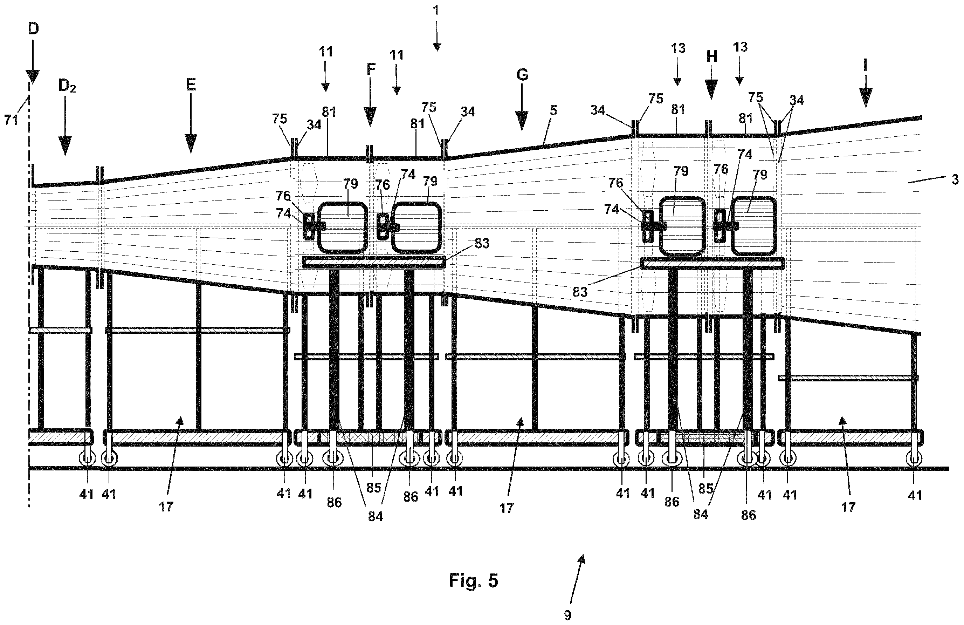

Wie eingangs bereits aufgeführt, sind Behinderungen des Luftstroms im Strömungskanal 3 für den Wirkungsgrad der gesamten Windkraftanlage nachteilig. In Fig. 5 ist eine alternative Ausführungsform der Ventilatoren 11 und 13 dargestellt, nämlich mit seitlich vor den Strömungskanal 3 herausgesetzten Motoren 79, wobei über die Antriebsräder 76 auf den Motorwellen 74 ein Antrieb der Ventilatorenflügel 80 erfolgen kann. Dieser Antrieb erfolgt beispielsweise über Riemen, wobei zur weiteren Verringerung der Behinderungen im Strömungskanal eine entsprechend strömungstechnisch geeignete Einhausung (nicht dargestellt) der Riemenantriebe im Strömungskanal vorgesehen werden kann.

Die Motoren 79 sind auf eine Unterkonstruktion 83 aufgesetzt, die auf senkrechten Stützen 84 ruht. wie auch bei den anderen Komponenten bzw. Abschnitten werden die Stützen von einer Platte 85 abgestützt, die ihrerseits mittels Stützräder 86 verfahrbar ist, wodurch die Motoren 79 mit ihrer jeweiligen Welle 74 und dem Antriebsrad 76 bewegbar sind.

Mit der vorliegenden Erfindung wird eine Windkraftanlage geschaffen, mit der Energie, insbesondere elektrische Energie, aus bewegter Umgebungsluft gewonnen werden kann, wobei die Leistungsaufnahme der Ventilatoren deutlich unter der Energielieferung der Turbine liegt, bedingt durch die deutliche Abkühlung des durch die Turbine strömenden Luftstroms und der Umwandlung der kinetischen Energie des Luftstroms in Rotationsenergie.

Ein weiterer Vorteil aus der vorliegenden Erfindung ergibt sich dadurch, dass der am Strömungskanal 3 wieder austretende Luftstrom deutlich gegenüber dem eintretenden Luftstrom abgekühlt ist, was ihn für eine klimatechnische Verwendung (Abkühlung) geeignet macht.

## Patentansprüche

1. Windkraftanlage (1) zur Erzeugung von Energie, insbesondere von elektrischer Energie, mittels bewegter Umgebungsluft, die einen Strömungskanal (3) aufweist, durch den die Umgebungsluft durch Ausbildung eines Luftstroms fließt, wobei der Strömungskanal (3) eine ihn begrenzende äußere Hülle (5) aufweist, mit:
einem ersten Abschnitt (A) mit sich trichterförmig verjüngendem Querschnitt, in den eine erste Umgebungsluft eintritt und beschleunigt wird,
einem zweiten Abschnitt (B) von im Wesentlichen konstanten Querschnitt, der sich an den ersten Abschnitt (A) anschließt und in dem sich ein Rotor (20) befindet, der durch die durchströmende Umgebungsluft in Drehung versetzbar ist, wobei der zweite Abschnitt (B) eine rohrförmige Fortsetzung (67) aufweist,
**gekennzeichnet durch**
einen dritten Abschnitt (C), durch den sich die rohrförmige Fortsetzung (67) des zweiten Abschnitts (B) erstreckt und der einen rohrförmigen sich verjüngenden Einlasstrichter (44) aufweist, der die rohrförmige Fortsetzung (67) umgibt und zum Eintritt einer zweiten Umgebungsluft in den Strömungskanal (3) dient,
einen vierten Abschnitt (D), in dem die rohrförmige Fortsetzung des zweiten Abschnitts (B) endet und der eine Ebene des geringsten Querschnitts (0-Ebene) des Strömungskanals gebildet aus erster und zweiter Umgebungsluft aufweist,
einen fünften sich aufweitenden Abschnitt (E), und
einen sich an den fünften Abschnitt (E) anschließenden sechsten Abschnitt (F), in dem zumindest eine Luftbeschleunigungseinrichtung (11) angeordnet ist.

2. Windkraftanlage nach Anspruch 1, **dadurch gekennzeichnet, dass** sie modulartig zumindest mit dem ersten bis sechsten Abschnitt (A bis F) aufgebaut ist und jeder Abschnitt (A bis F) auf einfache Weise mit seinem/n benachbarten Abschnitt/en verbindbar ist.

3. Windkraftanlage nach Anspruch 1 oder 2, **dadurch gekennzeichnet, dass** jeder Abschnitt (A bis F) auf einer Unterkonstruktion (39, 51) aufgenommen ist, die ihrerseits verfahrbar ist.

4. Windkraftanlage nach einem der Ansprüche 1 bis 3, **dadurch gekennzeichnet, dass** der Rotor (20) Teil einer Turbine (15) ist, die zu seiner Lagerung einen Stator (19) aufweist, der ebenfalls im Strömungskanal (3) angeordnet ist.

5. Windkraftanlage nach einem der Ansprüche 1 bis 4, **dadurch gekennzeichnet, dass** der Rotor (20) mit einem Zahnrad verbunden ist, das mit einem Zahnrad kämmt, durch das ein Generator (36) antreibbar ist.

6. Windkraftanlage nach einem der Ansprüche 1 bis 4, **dadurch gekennzeichnet, dass** der Rotor (20) mit einem Riemen- oder Kettenantrieb (60, 65) verbunden ist, der mit einem Antriebsrad (49) eines Generators verbunden ist.

7. Windkraftanlage nach einem der Ansprüche 1 bis 6, **dadurch gekennzeichnet, dass** der Abstand (68) der Auslassöffnung der rohrförmigen Fortsetzung (67) des zweiten Abschnitts (B) von der Ebene des geringsten Querschnitts (71) des vierten Abschnitts (D) vom Innendurchmesser der rohrförmigen Fortsetzung (67) des zweiten Abschnitts (B) abhängt und der optimale Abstand empirisch ermittelbar ist.

8. Windkraftanlage nach einem der Ansprüche 1 bis 3, **dadurch gekennzeichnet, dass** der Rotor außerhalb des Strömungskanals (3) gelagert ist.

9. Windkraftanlage nach einem der Ansprüche 1 bis 8, **dadurch gekennzeichnet, dass** die zumindest eine Luftbeschleunigungseinrichtung ein Ventilator (11) ist.

10. Windkraftanlage nach Anspruch 9, **dadurch gekennzeichnet, dass** der Ventilator (11) ein Laufrad bzw. Flügel (80) aufweist, das bzw. die mittels eines Motors (79) in Drehung versetzbar ist bzw. sind.

11. Windkraftanlage nach Anspruch 10, **dadurch gekennzeichnet, dass** der Motor (79) des Ventilators (11, 13) außerhalb des Strömungskanals (3) angeordnet ist.

12. Windkraftanlage nach einem der Ansprüche 1 bis 11, **dadurch gekennzeichnet, dass** ein siebter Abschnitt (G) in Form eines sich aufweitenden Auslassrohres (87) vorgesehen ist, der sich an den sechsten Abschnitt (F) anschließt.

13. Windkraftanlage nach einem der Ansprüche 1, 2 oder 4 bis 12, **dadurch gekennzeichnet, dass** sie in im Wesentlichen vertikaler Richtung angeordnet ist, bevorzugt mit Einlass oben und Auslass unten.

14. Windkraftanlage nach einem der Ansprüche 5 bis 13, **dadurch gekennzeichnet, dass** die mit dem Rotor (20) verbundene Antriebseinrichtung für den Generator (36) eingehaust ist.

15. Windkraftanlage nach einem der Ansprüche 1 bis 14, **dadurch gekennzeichnet, dass** die rohrförmige Fortsetzung (67) von im Wesentlichen konstantem Querschnitt ist oder sich in Strömungsrichtung aufweitet.

## Claims

1. Wind turbine (1) for generating energy, in particular electrical energy, by means of moving ambient air, which has a flow duct (3), through which the ambient air flows by forming an air stream, wherein the flow duct (3) has an outer casing (5) bounding it, comprising:
a first portion (A) with a cross section tapering in the form of a funnel, into which a first amount of ambient air enters and is accelerated,
a second portion (B) of a substantially constant cross section, which adjoins the first portion (A) and located in which is a rotor (20), which can be set in rotation by the ambient air flowing through, wherein the second portion (B) has a tubular continuation (67),
**characterized by**
a third portion (C), through which the tubular continuation (67) of the second portion (B) extends and which has a tubular, tapering inlet funnel (44), which surrounds the tubular continuation (67) and serves for the entry of a second amount of ambient air into the flow duct (3),
a fourth portion (D), in which the tubular continuation of the second portion (B) ends and which has a plane of the smallest cross section (0 plane) of the flow duct, formed by the first and second amounts of ambient air,
a fifth, widening portion (E), and
a sixth portion (F), which adjoins the fifth portion (E) and in which at least one air accelerating device (11) is arranged.

2. Wind turbine according to Claim 1, **characterized in that** it is constructed in a modular manner, at least with the first to sixth portions (A to F), and each portion (A to F) can be easily connected to the portion(s) adjacent to it.

3. Wind turbine according to Claim 1 or 2, **characterized in that** each portion (A to F) is accommodated on a substructure (39, 51), which for its part is movable.

4. Wind turbine according to one of Claims 1 to 3, **characterized in that** the rotor (20) is part of a turbine (15), which for its mounting has a stator (19), which is likewise arranged in the flow duct (3) .

5. Wind turbine according to one of Claims 1 to 4, **characterized in that** the rotor (20) is connected to a gearwheel, which meshes with a gearwheel by which a generator (36) can be driven.

6. Wind turbine according to one of Claims 1 to 4, **characterized in that** the rotor (20) is connected to a belt or chain drive (60, 65), which is connected to a drive wheel (49) of a generator.

7. Wind turbine according to one of Claims 1 to 6, **characterized in that** the distance (68) of the outlet opening of the tubular continuation (67) of the second portion (B) from the plane of the smallest cross section (71) of the fourth portion (D) depends on the inside diameter of the tubular continuation (67) of the second portion (B) and the optimum distance can be determined empirically.

8. Wind turbine according to one of Claims 1 to 3, **characterized in that** the rotor is mounted outside the flow duct (3).

9. Wind turbine according to one of Claims 1 to 8, **characterized in that** the at least one acceleration device is a fan (11).

10. Wind turbine according to Claim 9, **characterized in that** the fan (11) has an impeller or vanes (80), which can be set in rotation by means of a motor (79) .

11. Wind turbine according to Claim 10, **characterized in that** the motor (79) of the fan (11, 13) is arranged outside the flow duct (3).

12. Wind turbine according to one of Claims 1 to 11, **characterized in that** a seventh portion (G) is provided in the form of a widening outlet tube (87), which adjoins the sixth portion (F).

13. Wind turbine according to one of Claims 1, 2 or 4 to 12, **characterized in that** it is arranged in a substantially vertical direction, preferably with the inlet at the top and the outlet at the bottom.

14. Wind turbine according to one of Claims 5 to 13, **characterized in that** the drive device, connected to the rotor (20), for the generator (36) is enclosed by a housing.

15. Wind turbine according to one of Claims 1 to 14, **characterized in that** the tubular continuation (67) is of a substantially constant cross section or widens in the direction of flow.

## Revendications

1. Éolienne (1) pour la production d'énergie, notamment d'énergie électrique, au moyen d'air ambiant en mouvement, qui comprend un canal d'écoulement (3) dans lequel l'air ambiant s'écoule en formant un flux d'air, le canal d'écoulement (3) comportant une enveloppe extérieure (5) le délimitant, avec :
un premier tronçon (A) à section transversale se rétrécissant en forme d'entonnoir, dans lequel un premier air ambiant pénètre et est accéléré,
un deuxième tronçon (B) à section transversale essentiellement constante, qui se raccorde au premier tronçon (A) et dans lequel se trouve un rotor (20), lequel peut être mis en rotation au moyen de l'air ambiant qui y passe, le deuxième tronçon (B) comportant un prolongement tubulaire (67),
**caractérisée par**
un troisième tronçon (C), à travers lequel le prolongement tubulaire (67) du deuxième tronçon (B) s'étend et qui comporte un entonnoir d'entrée (44) tubulaire se rétrécissant, qui entoure le prolongement tubulaire (67) et sert à l'entrée d'un second air ambiant dans le canal d'écoulement (3),
un quatrième tronçon (D), dans lequel le prolongement tubulaire du deuxième tronçon (B) se termine et qui comprend un plan de section transversale la plus faible (plan-0) du canal d'écoulement formé du premier et du second air ambiant,
un cinquième tronçon (E) s'élargissant, et
un sixième tronçon (F) se raccordant au cinquième tronçon (E), dans lequel au moins un dispositif d'accélération d'air (11) est disposé.

2. Éolienne suivant la revendication 1, **caractérisée en ce qu'**elle est assemblée de manière modulaire au moins avec les premier à sixième tronçons (A à F) et chaque tronçon (A à F) peut être relié d'une manière simple à son/ses tronçon(s) voisin (s) .

3. Éolienne suivant la revendication 1 ou 2, **caractérisée en ce que** chaque tronçon (A à F) est reçu sur une structure inférieure (39, 51) qui, pour sa part, est déplaçable.

4. Éolienne suivant l'une des revendications 1 à 3, **caractérisée en ce que** le rotor (20) fait partie d'une turbine (15) qui, pour son support, comprend un stator (19) qui est également disposé dans le canal d'écoulement (3).

5. Éolienne suivant l'une des revendications 1 à 4, **caractérisée en ce que** le rotor (20) est relié à une roue dentée qui engrène avec une roue dentée au moyen de laquelle un générateur (36) peut être entraîné.

6. Éolienne suivant l'une des revendications 1 à 4, **caractérisée en ce que** le rotor (20) est relié à un entraînement à courroie ou à chaîne (60, 65) qui est relié à une roue d'entraînement (49) d'un générateur.

7. Éolienne suivant l'une des revendications 1 à 6, **caractérisée en ce que** la distance (68) de l'ouverture de sortie du prolongement tubulaire (67) du deuxième tronçon (B) à partir du plan de la section transversale la plus faible (71) du quatrième tronçon (D) dépend du diamètre intérieur du prolongement tubulaire (67) du deuxième tronçon (B) et la distance optimale peut être déterminée empiriquement.

8. Éolienne suivant l'une des revendications 1 à 3, **caractérisée en ce que** le rotor est monté à l'extérieur du canal d'écoulement (3).

9. Éolienne suivant l'une des revendications 1 à 8, **caractérisée en ce que** le, au moins un, dispositif d'accélération d'air est un ventilateur (11).

10. Éolienne suivant la revendication 9, **caractérisée en ce que** le ventilateur (11) comprend une roue mobile ou pale (80), qui est ou sont déplaçables en rotation au moyen d'un moteur (79).

11. Éolienne suivant la revendication 10, **caractérisée en ce que** le moteur (79) du ventilateur (11, 13) est disposé à l'extérieur du canal d'écoulement (3).

12. Éolienne suivant l'une des revendications 1 à 11, **caractérisée en ce qu'**il est prévu un septième tronçon (G) sous forme d'un tube de sortie (87) s'élargissant, qui se raccorde au sixième tronçon (F).

13. Éolienne suivant l'une des revendications 1, 2 ou 4 à 12, **caractérisée en ce qu'**elle est disposée suivant une direction essentiellement verticale, de préférence avec une entrée en haut et une sortie en bas.

14. Éolienne suivant l'une des revendications 5 à 13, **caractérisée en ce que** le dispositif d'entraînement, pour le générateur (36), relié au rotor (20) est monté sous carter.

15. Éolienne suivant l'une des revendications 1 à 14, **caractérisée en ce que** le prolongement tubulaire (67) est de section transversale essentiellement constante ou s'élargit suivant la direction d'écoulement.
